# EUROPEAN PATENT APPLICATION

(11) **EP 2 637 248 A1**
(43) Date of publication of application: **11.09.2013**
(21) Application number: 13156268.8
(22) Date of filing: 22.02.2013
(51) Int. Cl.: H01M 10/48, H01M 10/50, H01M 2/10

(54) **Battery system and temperature control method therefor**

(30) Priority: 09.03.2012 JP 2012053719
(71) Applicant: Hitachi Ltd., Tokyo 100-8280 (JP)
(72) Inventor: TANAKA, Toru, Tokyo, 100-8220 (JP); YAMAUCHI, Shin, Tokyo, 100-8220 (JP); INOUE, Takeshi, Tokyo, 100-8220 (JP)
(74) Representative: MERH-IP Matias Erny Reichl Hoffmann

(57) **Abstract**

Provided are a battery system and temperature control method therefor capable of suppressing excessive cooling of a battery module, diminishing a temperature variance, and leveling the temperatures of plural battery modules. In the battery system including cooling units each of which is provided with a cooling plate (2-1, 2-2) which includes a flow channel through which a refrigerant flows and on which a battery module that is an object of temperature control (1M-1, 1M-2) is placed, and a flow rate adjustment device (8-1, 8-2) that adjusts the flow rate of the refrigerant that flows through the flow channel, temperature sensors (6-1, 6-2) that individually sense the temperatures of the battery modules, and a refrigerant circulation mechanism (4) that branches out the refrigerant into the flow channels accompanying the cooling units, and joins and circulates the refrigerants coming from the flow channels, a control unit (7) adjusts the refrigerant flow rates using the flow rate adjustment devices (8-1, 8-2) according to the temperatures, which are sensed by the temperature sensors (6-1, 6-2), for each of the cooling units.

## Description

### Technical Field

The present invention relates to a battery system including plural batteries and a temperature control method for the battery system.

### Background Art

Battery systems are used for storage of power generated by utilizing natural energy, as a power supply for a smart grid, or as a backup power supply of facilities. By combining plural battery systems, a large-scale storage battery system of a megawatt class can be constructed. A secondary battery to be used as a power supply of such a system dissipates heat during charging or discharging, and progressively deteriorates to shorten its service life in case of a high temperature. Therefore, it is necessary to cool the secondary battery. When the temperature is extremely low, a resistance value in the battery rises to affect its battery performance. Therefore, the secondary battery is requested not to be excessively cooled. Further, in a battery system accommodating plural batteries, a temperature difference occurs depending on the batteries. There is a possibility that the service lives of the batteries may vary. Therefore, it is necessary to level the temperatures.

As a cooling technique for a battery system, for example, in "Onboard Power Supply System" disclosed in JP-A-2010-40420, a proposal is made of a configuration including a battery block that has plural cells concatenated, a cooling plate that is thermally coupled to the lower surface of the battery block and that is cooled with vaporization heat of a fed refrigerant in order to cool from beneath the cells which are thermally coupled to one another, a cooling mechanism that feeds the refrigerant to the cooling plate, a cooling duct which is disposed outside the battery block and through which the cells are ventilated to be cooled, and a blast fan that forcibly ventilates the cooling duct. In this configuration, the cooling plate that is cooled with the refrigerant cools the cells from beneath through heat conduction, and the cooling duct forcibly ventilates the upper parts of the cells so as to prevent condensation of electrode terminals and cool the cells.

### Summary

However, the art disclosed in the Japanese Unexamined Patent Application Publication No. 2010-40420 is the configuration including a pair of a cooling device and refrigerant circulation device for one cooling plate. Assuming that plural system configurations each of which is the configuration disclosed in the Japanese Unexamined Patent Application Publication No. 2010-40420 are simply employed in order to cool plural battery modules with plural cooling plates, there is difficulty in leveling the temperatures of the plural cooling plates, that is, the plural battery modules.

The present invention addresses the foregoing situation. An object of the present invention is to provide a battery system and temperature control method therefor capable of suppressing excessive cooling of a battery module, diminishing a temperature variance, and leveling the temperatures of plural battery modules.

In order to solve the foregoing problem, the present invention includes N cooling units (N denotes an integer equal to or larger than 2) each of which is provided with a cooling member that has a flow channel through which a refrigerant flows and has a battery module, which is an object of temperature control, placed thereon, and a flow rate adjustment means that adjusts the flow rate of the refrigerant which flows through the flow channel, temperature sensing means that individually sense the temperatures of the battery modules, a refrigerant circulation means that branches out the refrigerant into the flow channels of the N cooling units, and joins and circulates refrigerants coming from the flow channels, and a control means that uses the flow rate adjustment means to adjust the refrigerant flow rates according to the temperatures, which are sensed by the temperature sensing means, for each of the N cooling units.

According to the present invention, a battery system and temperature control method therefor capable of suppressing excessive cooling of a battery module, diminishing a temperature variance, and leveling the temperatures of plural battery modules can be realized.

### Brief Description of the Drawings

Fig. 1 is a configuration diagram of a battery system in accordance with the first embodiment of the present invention;
Fig. 2 is a perspective view illustrating the structure of a cooling plate;
Fig. 3 is a flowchart describing a temperature control method in the battery system of the first embodiment;
Fig. 4 is a configuration diagram illustrating a modification of the battery system of the first embodiment;
Fig. 5 is a configuration diagram of a battery system in accordance with the second embodiment of the present invention;
Fig. 6 is a perspective view illustrating an internal structure of the battery system of the second embodiment;
Fig. 7 is a flowchart describing a first temperature control method in the battery system of the second embodiment;
Fig. 8 is a flowchart describing a second temperature control method in the battery system of the second embodiment; and
Fig. 9 is a flowchart describing a third temperature control method in the battery system of the second embodiment.

### Detailed Description

As for embodiments of a battery system and temperature control method therefor of the present invention, the first embodiment and second embodiment will be described in that order with reference to drawings.

### First Embodiment

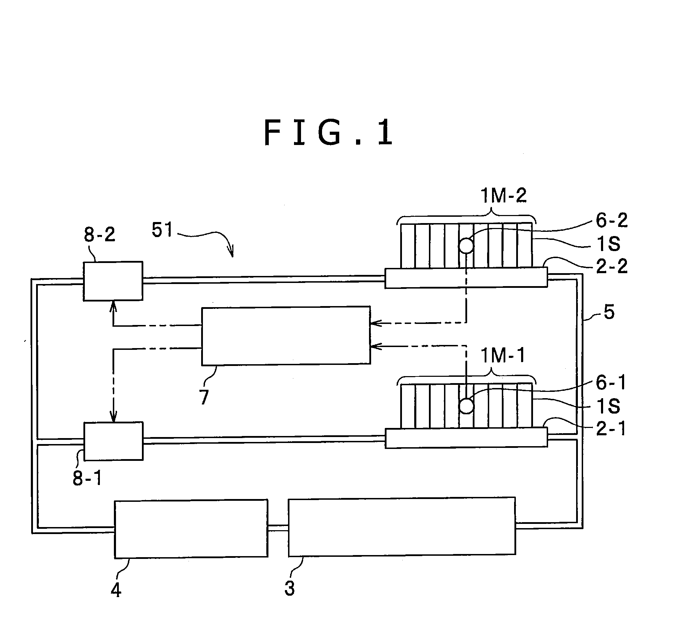

Fig. 1 is a configuration diagram of a battery system in accordance with the first embodiment of the present invention. In Fig. 1, a battery system 51 of the present embodiment includes two battery modules 1M-1 and 1M-2 that are objects of temperature control, two cooling units, a cooling device 3, a refrigerant circulation mechanism 4, a refrigerant flow channel 5, and a control unit 7.

The cooling unit on the lower side in the drawing shall be called a first-stage cooling unit, and the cooling unit on the upper side shall be called a second-stage cooling unit. The first-stage cooling unit includes a cooling plate 2-1 and a flow rate adjustment device 8-1, and controls the temperature of the battery module 1M-1. The second-stage cooling unit includes a cooling plate 2-2 and flow rate adjustment device 8-2, and controls the temperature of the battery module 1M-2.

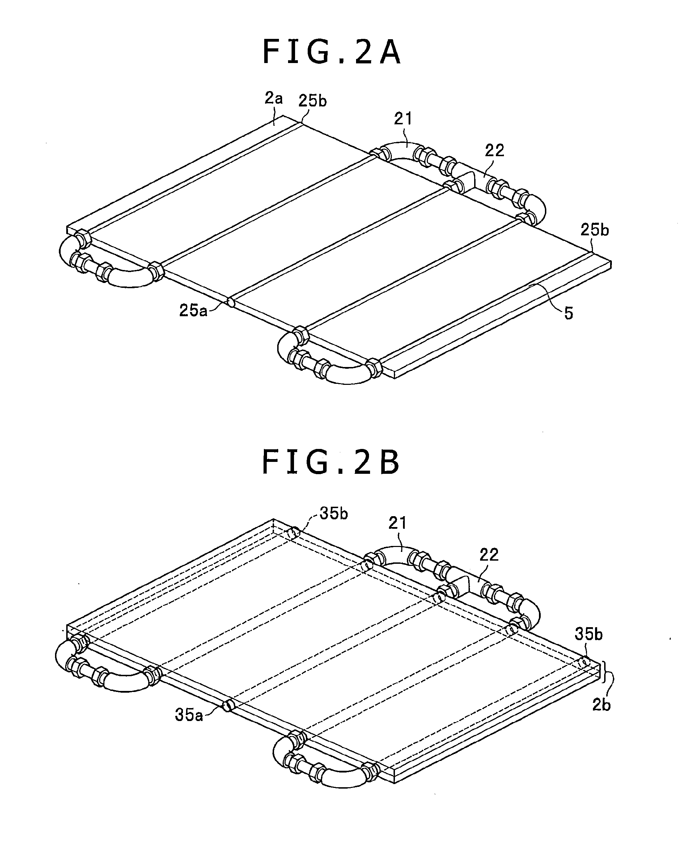

The cooling plates 2-1 and 2-2 refer to cooling members stated in Claims, and each include a flow channel through which a refrigerant flows. More particularly, the cooling plates have the structure shown in the perspective view of Fig. 2 (a) or Fig. 2(b).

Specifically, the flow channel of a refrigerant in a cooling plate 2a in Fig. 2(a) has five linear pipes, which serve as part of the refrigerant flow channel 5, juxtaposed with flat plates, which have the same shape, inserted among them. The five linear pipes are interconnected via L-shaped joints 21 and a T-shaped joint 22. The cooling plate 2a is structured so that the refrigerant can run through the entire cooling plate 2a. Reference sign 25a denotes a refrigerant entrance in the cooling plate 2a, and reference sign 25b denotes a refrigerant exit. The refrigerant flow channel in the cooling plate 2a is bifurcated onto both sides at the refrigerant entrance 25a located in the center of the cooling plate 2a. Thus, a temperature gradient derived from heat exchange accompanying the flow of the refrigerant from the refrigerant entrance 25 to the refrigerant exits 25b can be diminished. A cooling plate 2b shown in Fig. 2(b) has a refrigerant flow channel, which is similarly to that in Fig. 2(a), sandwiched between two flat plates.

As for the structure of the cooling plate, the structure is not limited to what is illustrated in Fig. 2 but any other structure will do. For example, a structure in which the spacing between the linear pipes in Fig. 2 (a) is narrowed, a structure in which the number of branches of the refrigerant flow channel in Fig. 2 is increased, a structure in which the cooling plate is hollowed and a member having a wavy cross-section is inserted into the hollow, and other various structures are conceivable.

The battery modules 1M-1 and 1M-2 each have plural cells 1S connected in series with one another, and are placed on the cooling plates 2-1 and 2-2 respectively. A description will be made by calling a set of cells, which is placed on each of the cooling plate 2-1 and 2-2, a battery module. The set of cells is not limited to the battery module. As long as the set of cells has a shape capable of being placed on the cooling plate, the set of cells may take on any form of, for example, an assembled battery, battery pack, or battery block.

Nearly in the centers of the battery modules 1M-1 and 1M2 respectively, temperature sensors 6-1 and 6-2 respectively are placed as temperature sensing means for individually sensing the temperatures of the battery modules 1M-1 and 1M-2 respectively. The battery temperatures sensed by the temperature sensors 6-1 and 6-2 are sent to the control unit 7.

The battery system 51 of the present embodiment includes, as a cooling system, the cooling device 3, refrigerant circulation mechanism 4, refrigerant flow channel 5, flow rate adjustment devices 8-1 and 8-2, and cooling plates 2-1 and 2-2. The present embodiment will be described on the assumption that a liquid, for example, an antifreeze is adopted as the refrigerant. However, the refrigerant is not limited to the liquid but may be a gas. Further, the cooling device 3 is embodied with a heat exchanger or the like, and the refrigerant circulation mechanism 4 is embodied with a circulation pump or the like. Further, the flow rate adjustment devices 8-1 and 8-2 are embodied with adjustment valves or the like whose valve apertures can be adjusted with a control signal sent from the control unit 7.

In addition, the flow channel of a refrigerant that flows in the first-stage cooling unit is provided with the flow rate adjustment device 8-1 and cooling plate 2-1. The flow channel of the refrigerant that flows through the second-stage cooling unit is provided with the flow rate adjustment device 8-2 and cooling plate 2-2. The refrigerant from the refrigerant circulation mechanism 4 traces the route of being branched out into the two refrigerant flow channels, being fed to the two respective cooling units, and then being joined to return to the cooling device 3.

The control unit 7 acquires the battery temperatures sensed by the temperature sensors 6-1 and 6-2 of the respective cooling units, and adjusts the refrigerant flow rates to the respective cooling units using the flow rate adjustment devices 8-1 and 8-2. More particularly, the control unit 7 increases the flow rate of the refrigerant that flows into the cooling unit whose battery temperature is relatively higher, and decreases the flow rate of the refrigerant that flows into the cooling unit whose battery temperature is relatively lower. The control unit 7 is realized to include a processor with a memory such as a microprocessor (MPU) or digital signal processor (DSP) and an input/output interface.

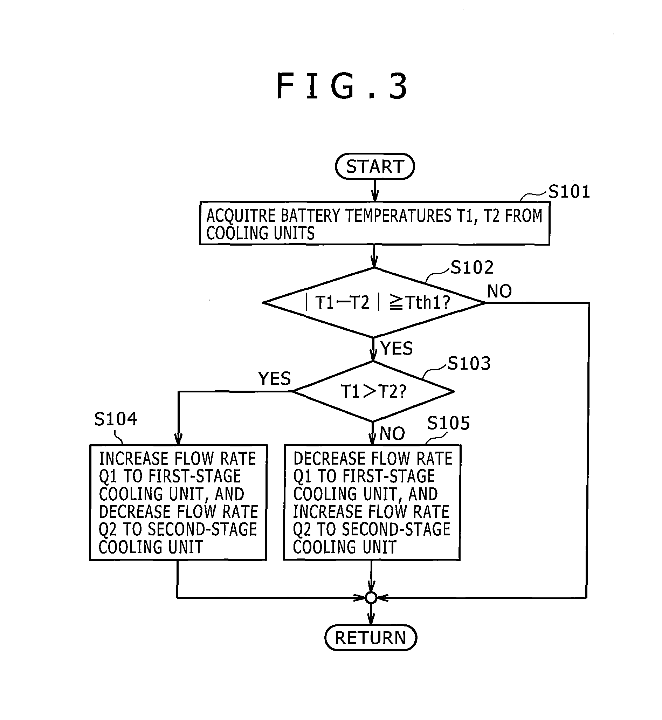

Next, a temperature control method in the battery system 51 including the foregoing components will be described with reference to Fig. 3. Fig. 3 is a flowchart describing the temperature control method in the battery system of the first embodiment. Processing to be described below refers to a control step stated in Claims, and is embodied as a program to be run in the processor of the control unit 7.

First, the control unit 7 acquires the battery temperatures sensed by the temperature sensors 6-1 and 6-2 (step S101). Herein, T1 denotes the temperature of the battery module 1M-1 that is an object of temperature control by the first-stage cooling unit, and T2 denotes the temperature of the battery module 1M-2 that is an object of temperature control by the second-stage cooling unit. Hereinafter, the temperatures will be mentioned for short such as "the temperature T1 of the first-stage cooling unit."

Thereafter, the control unit 7 decides whether the absolute value of the difference between the temperatures T1 and T2 is equal to or larger than a first threshold Tth1 (step S102). If the absolute value of the difference is equal to or larger than the first threshold Tth1, the control unit 7 proceeds to step S103. If the absolute value of the difference falls below the first threshold Tth1, the control unit 7 performs nothing but terminates the processing routine. Namely, in case the difference between the temperatures T1 and T2 is equal to or larger than the first threshold Tth1, temperature control is implemented. Herein, the first threshold Tth1 is a reference value for deciding on a degree of a temperature variance in the battery system, and is pre-set based on the type of cells 1S or the way of structuring the battery modules 1M-1 and 1M-2. Supposing an example of a concrete value is presented, the first threshold is set generally to 5° C or preferably to 10° C.

Thereafter, the control unit 7 compares the temperatures T1 and T2 with each other (step S103). If the temperature T1 is larger than the temperature T2, the control unit 7 executes step S104. If the temperature T1 is equal to or smaller than the temperature T2, the control unit 7 executes step S105.

Specifically, as for the temperatures of the battery modules, if the temperature T1 is larger than the temperature T2, the valve apertures of the flow rate adjustment devices 8-1 and 8-2 are adjusted so that a flow rate Q1 to the first-stage cooling unit can be increased and a flow rate Q2 to the second-stage cooling unit can be decreased (step S104). If the temperature T1 is equal to or smaller than the temperature T2, the valve apertures of the flow rate adjustment devices 8-1 and 8-2 are adjusted so that the flow rate Q1 to the first-stage cooling unit can be decreased and the flow rate Q2 to the second-stage cooling unit can be increased (step S105).

The foregoing processing from step S101 to step S105 is performed at regular intervals. Every time the processing is performed, a decision is made on the degree of a temperature variance at step S102. If a decision is made that the temperature variance is large, temperature control is executed.

As mentioned above, according to the battery system 51 and temperature control method therefor in accordance with the present embodiment, the battery system includes the cooling units each of which is provided with the cooling plate 2-1 or 2-2, which includes the flow channel through which a refrigerant flows and on which the battery module 1M-1 or 1M-2 that is an object of temperature control is placed, and the flow rate adjustment device 8-1 or 8-2 that adjusts a flow rate of the refrigerant which flows through the flow channel, the temperature sensors 6-1 and 6-2 that individually sense the temperature of the battery module 1M-1 or 1M-2, and the refrigerant circulation mechanism 4 that branches out the refrigerant into the flow channels of the cooling units and joins and circulates refrigerants coming from the flow channels. Herein, the control unit 7 (control step) adjusts, for each of the cooling units, the refrigerant flow rates using the flow rate adjustment devices 8-1 and 8-2 according to the temperatures sensed by the temperature sensors 6-1 and 6-2. More particularly, the control unit 7 (control step) adjusts the refrigerant flow rates when the difference between the sensed temperatures exceeds a predetermined value. The control unit 7 increases the flow rate of the refrigerant flowing in the cooling unit whose battery temperature is relatively higher, and decreases the flow rate of the refrigerant flowing in the cooling unit whose battery temperature is relatively lower.

As mentioned above, a larger quantity of a refrigerant is fed to the cooling unit whose battery temperature is relatively higher, and a smaller quantity of the refrigerant is fed to the cooling unit whose battery temperature is relatively lower. Therefore, a temperature variance between the battery modules can be diminished and the temperatures therefor can be leveled. Further, since the refrigerant flow rate in the cooling unit whose battery temperature is relatively lower is decreased, excessive cooling of the battery module can be suppressed.

In temperature control at step S104 or S105 in Fig. 3, the flow rate to the lower-temperature cooling unit is decreased. Alternatively, the refrigerant may not be fed to the lower-temperature cooling unit. Thus, by ceasing feed of the refrigerant to the cooling unit that need not perform cooling, excessive cooling of the battery module can be further suppressed. If the flow rate in the entire cooling system remains constant, whatever technique is adopted, a larger quantity of the refrigerant flows into the higher-temperature cooling unit by a quantity by which the refrigerant flowing into the lower-temperature cooling unit is reduced (by a quantity of the refrigerant whose feed to the lower-temperature cooling unit is ceased). The latter technique causing the flow rate to the higher-temperature cooling unit to get doubled can level the temperatures within a shorter time. However, since the flow rate is doubled, the fluid pressures in the pipes constituting the refrigerant flow channel get higher. The pipes are requested to withstand higher pressures.

If a decision is made at step S102 in Fig. 3 that the absolute value of the difference falls below the first threshold Tth1, nothing is performed but the processing routine is terminated.

Alternatively, as normal-cooling time control, the flow rates may be re-set so that the refrigerant can be distributed or fed to the cooling units, and then the processing routine may be terminated. This is because after a temperature variance is diminished to fall within a permissible temperature range, normal temperature control should be resumed.

Further, the flow rate adjustment devices 8-1 and 8-2 may be used to adjust the refrigerant flow rates according to the differences of the temperatures sensed by the temperature sensors 6-1 and 6-2 from a predetermined temperature (target set temperature or mean value between the temperature T1 and temperature T2). For example, when control is implemented based on the target set temperature Topt, a control sequence described below may be followed.

Specifically, the differences of the temperatures T1 and T2 from the target set temperature Topt are obtained. The cooling unit whose temperature has a difference that is equal to or larger than a second threshold Tth2 (hereinafter, called an object-of-control cooling unit) shall be subjected to temperature control. By deciding whether the difference is positive or negative, if the temperature of the object-of-control cooling unit is higher than the target set temperature Topt by the second threshold Tth2 or more, the flow rate to the object-of-control cooling unit is increased. If the temperature of the object-of-control cooling unit is lower than the target set temperature Topt by the second threshold Tth2 or more, the flow rate to the object-of-control cooling unit is decreased. Otherwise, feed of the refrigerant to the object-of-control cooling unit is ceased. Thus, the battery module temperature of the object-of-control cooling unit can be approached to the target set temperature Topt. Eventually, a temperature variance between the battery modules can be diminished and the temperatures thereof can be leveled.

### Modification

As described in relation to the first embodiment, when the flow rate is increased, the liquid pressures in the pipes constituting the refrigerant flow channel get higher, and the flow channel pipes are therefore requested to withstand higher pressures. The present modification is structured to include a bypass flow channel which is connected in parallel with the flow channels of the cooling units and whose flow rate can be adjusted.

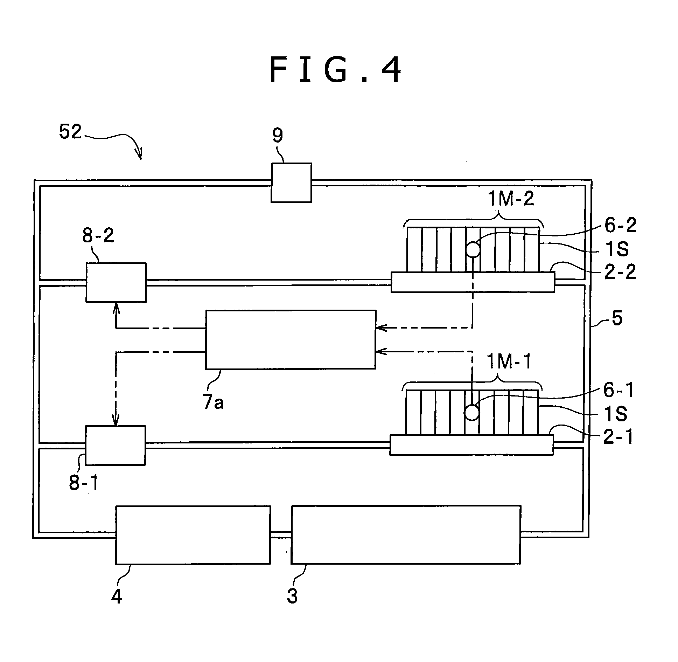

Fig. 4 is a configuration diagram illustrating the modification of the battery system of the first embodiment. In the drawing, a battery system 52 of the present modification has a bypass flow channel, which includes a pipe pressure adjustment mechanism 9, appended to the configuration of the first embodiment (Fig. 1) in parallel with the flow channels of a refrigerant that flows into the first-stage and second-stage cooling units respectively. Herein, the pipe pressure adjustment mechanism 9 is embodied with a control valve that opens when the pipe pressure exceeds a predetermined pressure, and closes when the pipe pressure falls below the predetermined pressure. Specifically, if the liquid pressures in the pipes constituting the refrigerant flow channel 5 of the cooling system exceeds the predetermined pressure, the bypass flow channel including the pipe pressure adjustment mechanism 9 opens to lower the liquid pressures in the pipes of the entire cooling system. Therefore, as for the capability of the flow channel pipes to withstand a pressure, the flow channel pipes should be able to merely withstand the predetermined pressure. The refrigerant flow channel 5 can be structured with lower-cost pipes.

Further, if the rotating velocity of the refrigerant circulation mechanism 4 (circulation pump) is made controllable through inverter control or the like, the flow rate of a refrigerant to be fed to the refrigerant flow channel 5 can be controlled even by the refrigerant circulation mechanism 4. For example, assume that feed of the refrigerant to one of the cooling units which need not perform cooling is ceased, and the refrigerant is fed to the other cooling unit alone. In this case, the flow rate is doubled and the liquid pressures in the pipes constituting the refrigerant flow channel get higher. In this case, the rotating velocity of the refrigerant circulation mechanism 4 is lowered in order to decrease the flow rate to the entire cooling system. Thus, the liquid pressures in the pipes can be lowered.

As mentioned above, according to the present modification, a rise in the liquid pressures in the pipes can be suppressed through one or both of control of opening and closing of the bypass flow channel and control of the rotating velocity of the refrigerant circulation mechanism 4. Therefore, the pipes of the cooling system can be formed even with those whose performance of withstanding a pressure is lower. This contributes to realization of a low-cost battery system.

### Second Embodiment

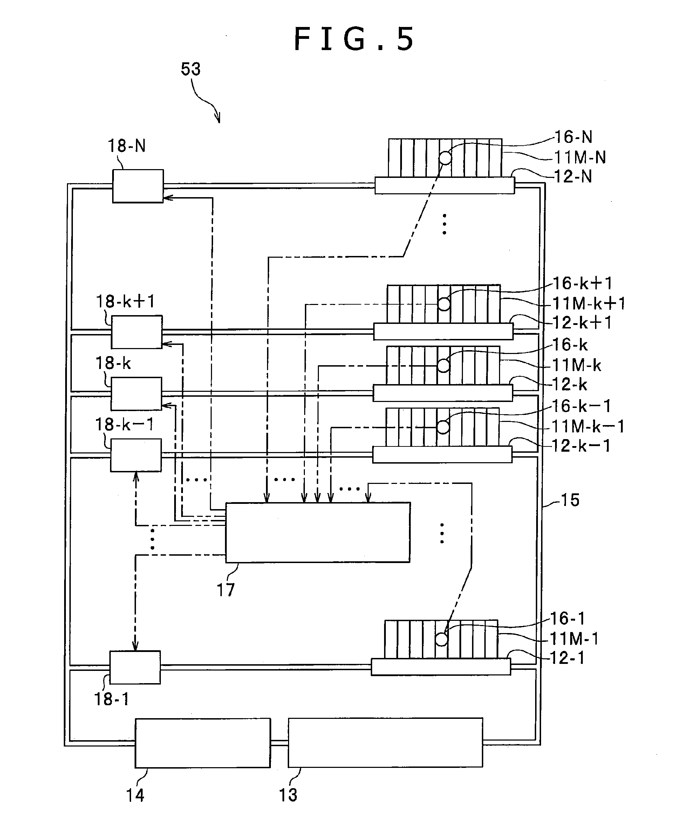

Next, a description will be made of a battery system and temperature control method therefor in accordance with the second embodiment of the present invention. Fig. 5 is a configuration diagram of the battery system in accordance with the second embodiment of the present invention. In Fig. 5, a battery system 53 of the present embodiment includes N (N denotes an integer equal to or larger than 2) (in the first embodiment, N equals 2) battery modules 11M-1 to 11M-N that are objects of temperature control, N cooling units, a cooling device 13, a refrigerant circulation mechanism 14, a refrigerant flow channel 15, and a control unit 17.

The battery modules 11M-1 to 11M-N each have, similarly to those in the first embodiment, plural cells connected in series with one another, and are placed on the cooling plates 12-1 to 12-N respectively. Further, temperature sensors 16-1 to 16-N are, similarly to those in the first embodiment, disposed nearly in the centers of the respective battery modules 11M-1 to 11M-N as temperature sensing means that individually sense the temperatures of the battery modules 11M-1 to 11M-N. The battery temperatures sensed by the temperature sensors 16-1 to 16-N are sent to the control unit 17.

In the drawing, the cooling unit located on the lowermost side shall be called a first-stage cooling unit, and the cooling unit located on the uppermost side shall be called the N-stage cooling unit. The j-th-stage (j ranges from 1 to N) cooling unit includes the cooling plate 12-j and a flow rate adjustment device 18-j. The cooling plates 12-1 to 12-N are, similarly to those in the first embodiment, cooling members each including the refrigerant flow channel structured as shown in the perspective diagram of Fig. 2 (a) or Fig. 2(b).

The battery system 53 of the present embodiment includes, as a cooling system, the cooling device 13, the refrigerant circulation mechanism 14, a refrigerant flow channel 15, the flow rate adjustment devices 18-1 to 18-N, and the cooling plates 12-1 to 12-N. Even the present embodiment will be described on the assumption that the refrigerant is a liquid. Needless to say, a gas may be adopted as the refrigerant. Similarly to the first embodiment, the cooling device 13 is embodied with a heat exchanger or the like, and the refrigerant circulation mechanism is embodied with a circulation pump or the like. Further, the flow rate adjustment device 18-1 to 18-N are embodied with adjustment valves or the like whose valve apertures can be adjusted in response to a control signal sent from the control unit 17.

The flow channel of the j-th-stage cooling unit (j ranges from 1 to N) includes the flow rate adjustment device 18-j and cooling plate 12-j. The refrigerant from the refrigerant circulation mechanism 14 traces the route of being branched out into the N refrigerant flow channels, being fed to the N cooling units, and then being joined to return to the cooling device 13.

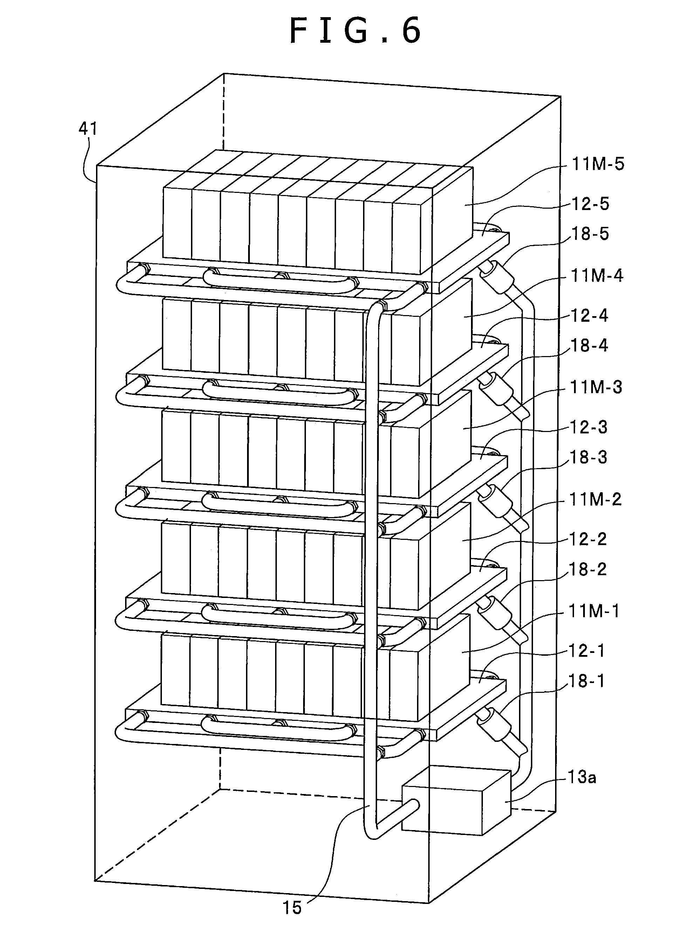

Fig. 6 shows an example of a configuration in which the cooling plates 12-1 to 12-N have the structure shown in Fig. 2(b) and the number N of cooling units is five. The battery system shown in the drawing is structured to have the five cooling units stacked and loaded in a housing 41. In Fig. 6, a concrete attachment structure for the cooling units, temperature sensors, and others are not shown. In addition, the cooling device 13, refrigerant circulation mechanism 14, and control unit 17 are shown to be integrated into a cooling device 13a.

A refrigerant from the cooling device 13a that includes the control unit and refrigerant circulation mechanism is branched out into five refrigerant flow channels, and then fed to the five cooling units. In the j-th-stage cooling unit, the refrigerant is fed to the refrigerant entrance in the center of the cooling plate 12-j by way of the flow rate adjustment device 18-j, branched out in the lateral directions of the cooling plate 12-j, and then joined outside the cooling plate 12-j. Further, the refrigerants coming out of the five cooling units are joined to return to the cooling device 13a.

The control unit 17 acquires the battery temperatures sensed by the temperature sensors 16-1 to 16-N of the respective cooling units, and adjusts the refrigerant flow rates to the respective cooling units using the flow rate adjustment devices 18-1 to 18-N according to the battery temperatures. The control unit 17 is realized to include a processor such as a microprocessor (MPU) or digital signal processor (DSP) with a memory and an input/output interface.

More particularly, the control unit 17 in the present embodiment adopts control techniques to be described below.
(1) When the difference between the maximum value and minimum value of the temperatures sensed by the temperature sensors 16-1 to 16-N in the N cooling units exceeds a predetermined value (first threshold), the refrigerant flow rates are adjusted.
(2) The refrigerant flow rates to the respective cooling units are adjusted according to the distribution of the temperatures sensed by the temperature sensors 16-1 to 16-N in the N cooling units, so that a temperature variance among the battery modules can be diminished and the temperatures thereof can be leveled.
(3) The refrigerant flow rates are adjusted using the flow rate adjustment devices 18-1 to 18-N according to the differences of the temperatures sensed by the temperature sensors 16-1 to 16-N from a predetermined temperature (target set temperature or mean value among the N cooling units), so that a temperature variance among the battery modules can be diminished and the temperatures thereof can be leveled.
(4) The refrigerant flow rate to the cooling unit, the sensed temperature of which has a large difference from the predetermined temperature, out of the cooling units whose sensed temperatures are found in the above technique (3) to exceed the predetermined temperature is adjusted by priority.
(5) Assuming that the pairs of the cooling plate 12-j (j ranges from 1 to N) and the battery module 11M-j placed on the cooling plate 12-j are stacked, if the refrigerant flow rate to the k-th-stage cooling unit is regarded as an object of adjustment, the refrigerant flow rates to the k-th-stage and k+1-th-stage cooling units are adjusted according to the differences of the sensed temperature of the k-th-stage cooling unit from the sensed temperatures of the k-1-th-stage and k+1-th-stage cooling units, so that a temperature variance among the battery modules can be diminished and the temperatures thereof can be leveled.

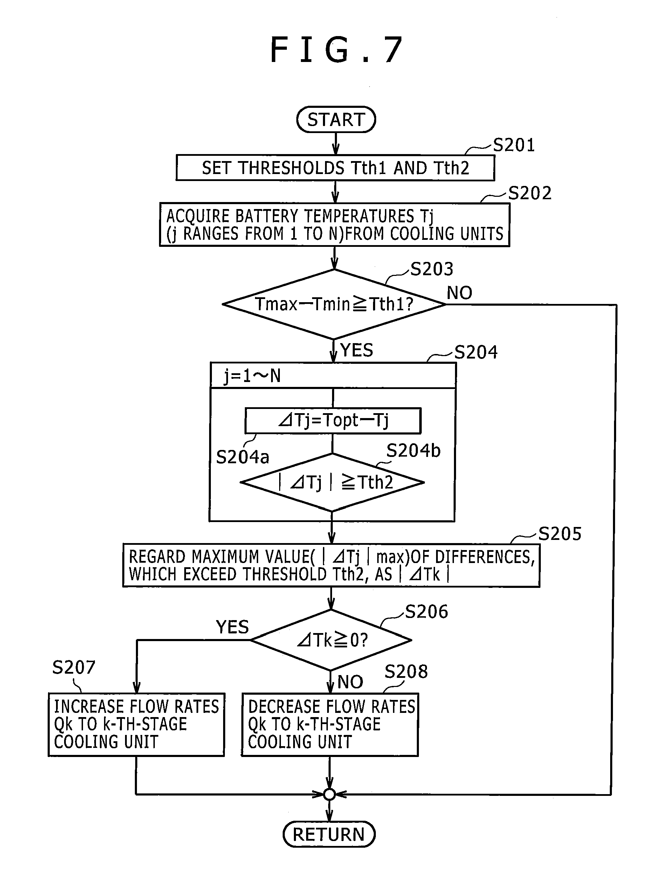

Next, a first temperature control method in the battery system 53 having the foregoing components will be described with reference to Fig. 7. Fig. 7 is a flowchart describing the first temperature control method in the battery system 53 of the second embodiment. Processing to be described below refers to a control step stated in Claims, and is embodied as a program to be run in the processor of the control unit 17. In addition, the first temperature control method is a combination of (1), (3), and (4) out of the aforesaid control techniques the control unit 17 can adopt.

To begin with, the control unit 17 sets a first threshold Tth1 and second threshold Tth2 (step S201). Similarly to the first embodiment, the first threshold Tth1 is a reference value for deciding on a degree of a temperature variance in the battery system, and the second threshold Tth2 is used to set a range of permissible deviations (differences) from a target set temperature.

Thereafter, the control unit 17 acquires the battery temperatures Tj (j ranges from 1 to N) sensed by the temperature sensors 16-1 to 16-N of the respective cooling units (step S202). At this time, a maximum value and minimum value out of the acquired battery temperatures Tj (j ranges from 1 to N) are preserved as the maximum value Tmax and minimum value Tmin.

Thereafter, the control unit 17 decides whether the difference between the maximum value Tmax and minimum value Tmin is equal to or larger than the first threshold Tth1 (step S203). If the difference is equal to or larger than the first threshold Tth1, the control unit 17 proceeds to step S204. If the difference falls below the first threshold Tth1, the control unit 17 performs nothing but terminates the processing routine. Namely, when the difference between the maximum value and minimum value is equal to or larger than the first threshold Tth1, temperature control is implemented.

Thereafter, at step S204, the control unit 17 obtains the differences ΔTj of the battery temperatures Tj (j ranges from 1 to N) from the target set temperature Topt (step S204a), and identifies the cooling units whose battery temperatures have the differences ΔTj the absolute values of which are equal to or larger than the second threshold Tth2 (step S204b). Among the cooling units whose battery temperatures have the differences the absolute values of which are equal to or larger than the second threshold Tth2, the control unit 17 selects the cooling unit, the battery temperature of which has the difference whose absolute value is the maximum value, as an object-of-control cooling unit (called a k-th-stage cooling unit) (step S205). Namely, temperature control is performed on the object-of-control cooling unit.

Thereafter, the control unit 17 decides whether the difference ΔTk of the battery temperature Tk of the k-th-stage cooling unit from the target set temperature Topt is positive or negative (step S206). If the difference is positive, that is, if the battery temperature Tk is equal to or larger than the target set temperature Topt by the second threshold Tth2 or more, the control unit 17 adjusts the valve aperture of the flow rate adjustment device 18-k so as to increase the flow rate Qk to the k-th-stage cooling unit (step S207). If the difference is negative, that is, if the battery temperature Tk is lower than the target set temperature Topt by the second threshold Tth2 or more, the control unit 17 adjusts the valve aperture of the flow rate adjustment device 18-k so as to decrease the flow rate Qk to the k-th-stage cooling unit (step S208).

The foregoing processing of step S201 to step S208 is performed at regular intervals. Every time the processing is performed, a decision is made on a degree of a temperature variance at step S203. If a decision is made that the temperature variance is large, temperature control is implemented.

As mentioned above, according to the first temperature control method, a larger quantity of a refrigerant is fed to the cooling unit whose battery temperature is the highest, and a smaller quantity of the refrigerant is fed to the cooling unit whose battery temperature is the lowest. Therefore, a temperature variance among the battery modules can be diminished and the temperatures thereof can be leveled. In addition, by decreasing the refrigerant flow rate to the cooling unit whose battery temperature is the lowest, excessive cooling of the battery module can be suppressed. At step S208, the flow rate to the cooling unit whose battery temperature is the lowest is decreased. Alternatively, the refrigerant may not be fed to the cooling unit. Thus, by ceasing feed of the refrigerant to the cooling unit that need not perform cooling, excessive cooling of the battery module can be further suppressed.

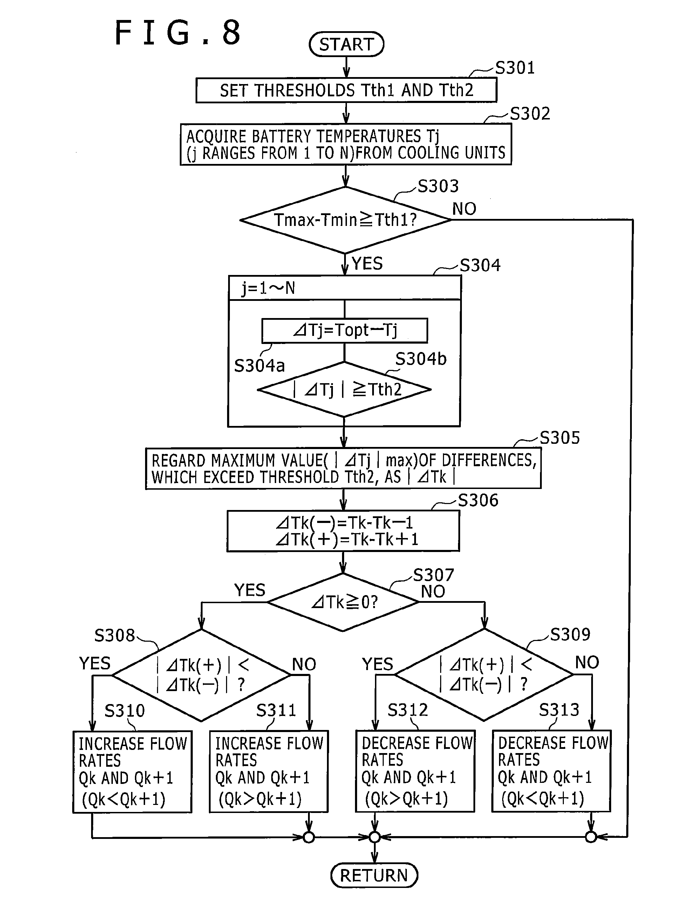

Next, a second temperature control method in the battery system 53 of the present embodiment will be described with reference to Fig. 8. Herein, Fig. 8 is a flowchart describing the second temperature control method in the battery system 53 of the second embodiment. Processing to be described below refers to a control step stated in Claims, and is embodied as a program to be run in the processor of the control unit 17. The second temperature control method is a combination of (1) and (5) out of the aforesaid control techniques the control unit 17 can adopt.

The control technique (5) of the control unit 17 requires as a precondition such a structure that the pairs of the cooling plate 12-j (j ranges from 1 to N) and the battery module 11M-j placed on the cooling plate 12-j are stacked. More particularly, the structure is such that the upper surface of the k-th-stage (k ranges from 1 to 5 in Fig. 6) battery module 11M-k in Fig. 6 and the lower surface of the k+1-th-stage cooling plate 12-k+1 are in close contact with each other, that is, the upper surface of the k-th-stage battery module and the lower surface of the k+1-th-stage cooling plate have as close a thermal coupling as a thermal coupling which the k-th-stage battery module 11M-k has with respect to the k-th-stage cooling plate 12-k on the lower surface side thereof.

First, similarly to the first temperature control method, the control unit 17 sets a first threshold Tth1 and second threshold Tth2 (step S301). Thereafter, the control unit 17 acquires the battery temperatures Tj (j ranges from 1 to N) sensed by the temperature sensors 16-1 to 16-N of the respective cooling units (step S302), and decides whether the difference between the maximum value Tmax and minimum value Tmin is equal to or larger than the first threshold Tth1 (step S303). If the difference is equal to or larger than the first threshold Tth1, the control unit 17 proceeds to step S304. If the difference falls below the first threshold Tth1, the control unit performs nothing but terminates the processing routine. Namely, when the difference between the maximum value and minimum value is equal to or larger than the first threshold Tth1, temperature control is implemented.

At step S304, similarly to the first temperature control method, the control unit 17 obtains the differences ΔTj of the battery temperatures Tj (j ranges from 1 to N) from the target set temperature Topt (step S304), and identifies the cooling units whose battery temperatures have the difference ΔTj the absolute values of which are equal to or larger than the second threshold Tth2 (step S304b). Among the cooling units whose battery temperatures have the differences ΔTj the absolute values of which exceed the second threshold Tth2, the control unit 17 selects the cooling unit, the battery temperature of which has the difference ΔTj whose absolute value is a maximum value, as an object-of-control cooling unit (called a k-th-stage cooling unit) from among the cooling units whose battery temperatures have the differences ΔTj the absolute values of which exceed the second threshold Tth2 (step S305). In short, temperature control shall be performed on the object-of-control cooling unit.

Thereafter, the control unit 17 obtains the temperature difference ΔTk(-) of the battery temperature Tk of the k-th-stage cooling unit from the battery temperature Tk-1 of the k-1-th-stage cooling unit, and the temperature difference ΔTk(+) thereof from the battery temperature Tk+1 of the k+1-th-stage cooling unit (step S306). The control unit 17 then decides whether the difference ΔTk of the battery temperature Tk of the k-th-stage control unit from the target set temperature Topt is positive or negative (step S307). If the difference ΔTk is positive, the control unit 17 proceeds to step S308. If the difference ΔTk is negative, the control unit 7 proceeds to step S309.

If the battery temperature Tk is higher than the target set temperature Topt by the second threshold Th2 or more (positive t step S307), the control unit 17 compares the absolute value of the temperature difference ΔTk(+) of the k-th-stage cooling unit from the upper-side cooling unit with the absolute value of the temperature difference ΔTk(-) of the k-th-stage control unit from the lower-side cooling unit.

If the battery temperature Tk of the k-th-stage cooling unit takes on the maximum value Tmax, the absolute value of the temperature difference ΔTk(+) is smaller than the absolute value of the temperature difference ΔTk(-), and the temperature difference of the k-th-stage cooling unit from the lower-side cooling unit is larger, the control unit 17 proceeds to step S310. The control unit 17 then adjusts the valve apertures of the flow-rate adjustment devices 18-k and 18-k+1 so that the flow rates Qk and Qk+1 to the k-th-stage and k+1-th-stage cooling units can be increased while the relationship that the flow rate Qk to the k-th-stage cooling unit is relatively smaller than the flow rate Qk+1 to the k+1-th-stage cooling unit is held intact.

If the battery temperature Tk of the k-th-stage cooling unit takes on the maximum value Tmax, the absolute value of the temperature difference ΔTk(+) is larger than the absolute value of the temperature difference ΔTk(-), and the temperature difference from the upper-side cooling unit of the k-th-stage cooling unit is larger, the control unit 17 proceeds to step S311. The control unit 17 then adjusts the valve apertures of the flow rate adjustment devices 18-k and 18-k+1 so that the flow rates Qk and Qk+1 to the k-th-stage and k+1-th-stage cooling units can be increased while the relationship that the flow rate Qk to the k-th-stage cooling unit is relatively larger than the flow rate Qk+1 to the k+1-th-stage cooling unit is held intact.

If the battery temperature Tk of the k-th-stage cooling unit takes on the minimum value Tmin, the absolute value of the temperature difference ΔTk(+) is smaller than the absolute value of the temperature difference ΔTk(-), and the temperature difference from the lower-side cooling unit of the k-th-stage cooling unit is larger, the control unit 17 proceeds to step S312. The control unit 17 then adjusts the valve apertures of the flow rate adjustment devices 18-k and 18-k+1 so that the flow rates Qk and Qk+1 to the k-th-stage and k+1-th-stage cooling units can be decreased while the relationship that the flow rate Qk to the k-th-stage cooling unit is relatively larger than the flow rate Qk+1 to the k+1-th-stage cooling unit is held intact.

Further, if the battery temperature Tk of the k-th-stage cooling unit takes on the minimum value Tmin, the absolute value of the temperature difference ΔTk(+) is larger than the absolute value of the temperature difference ΔTk(-), and the temperature difference from the upper-side cooling unit of the k-th-stage cooling unit is larger, the control unit 17 proceeds to step S313. The control unit 17 then adjusts the valve apertures of the flow rate adjustment devices 18-k and 18-k+1 so that the flow rates Qk and Qk+1 of the k-th-stage and k+1-th-stage cooling units can be increased while the relationship that the flow rate Qk to the k-th-stage cooling unit is relatively smaller than the flow rate Qk+1 to the k+1-th-stage cooling unit is held intact.

In short, the processing of step S310 to step S313 is to adjust the relationship between the flow rate Qk to the k-th-stage cooling unit and the flow rate Qk+1 to the k+1-th-stage cooling unit according to the result of comparison of the temperature difference of the object-of-control cooling unit from the upper-side cooling unit with the temperature difference thereof from the lower-side cooling unit.

The processing of step S301 to step S313 is performed at regular intervals. Every time the processing is performed, the degree of a temperature variance is decided at step S303. If a decision is made that the temperature variance is large, temperature control is implemented.

As mentioned above, according to the second temperature control method, a larger quantity of a refrigerant is fed to the object-of-control cooling unit whose battery temperature is the highest and the cooling unit on the immediately upper side of the object-of-control cooling unit, and a smaller quantity of the refrigerant is fed to the object-of-control cooling unit whose battery temperature is the lowest and the cooling unit on the immediately upper side of the object-of-control cooling unit. Therefore, a temperature variance among the battery modules can be more quickly diminished and the temperatures thereof can be leveled. In addition, the relationship between the flow rate Qk to the k-th-stage cooling unit and the flow rate Qk+1 to the k+1-th-stage cooling unit is adjusted according to the result of comparison of the temperature difference of the object-of-control cooling unit from the upper-side control unit with the temperature difference thereof from the lower-side cooling unit. This enables fine control dependent on a temperature distribution around the object-of-control cooling unit. In addition, by decreasing the refrigerant flow rates to the object-of-control cooling unit, the battery temperature of which is the lowest, and the cooling unit on the immediately upper side of the object-of-control cooling unit, excessive cooling of the battery modules can be suppressed.

At steps S309, S312, and S313, the flow rates to the object-of-control cooling unit, the battery temperature of which is the lowest, and the cooling unit on the immediately upper side of the object-of-control cooling unit are decreased. Alternatively, a refrigerant may not be fed to the cooling units. When feed of the refrigerant to the cooling units that need not perform cooling is thus ceased, control is further simplified and excessive cooling of the battery modules can be further suppressed.

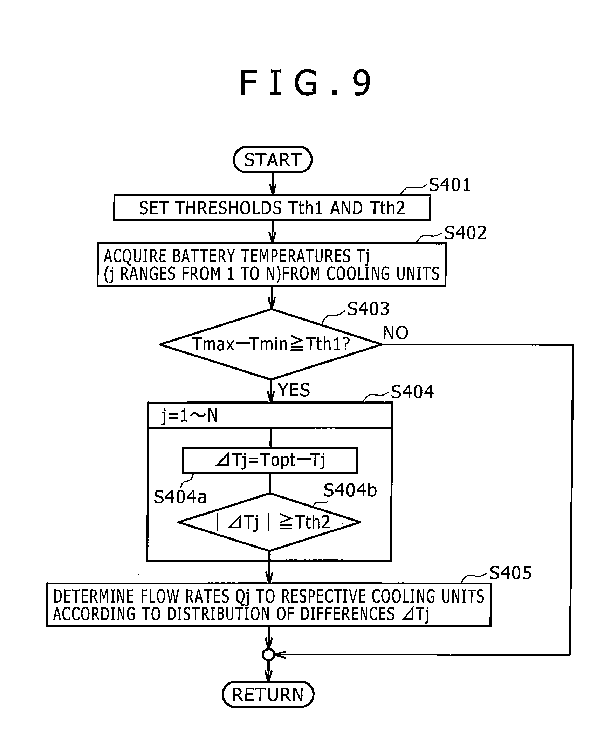

Next, a third temperature control method in the battery system 53 of the present embodiment will be described with reference to Fig. 9. Herein, Fig. 9 is a flowchart describing the third temperature control method in the battery system 53 of the second embodiment. Processing to be described below refers to a control step stated in Claims, and embodied as a program to be run in the processor of the control unit 17. In addition, the third temperature control method is a combination of (1) and (2) out of the aforesaid control techniques which the control unit 17 can adopt.

If the refrigerant flow rates are adjusted according to the distribution of battery temperatures Tj (j ranges from 1 to N) sensed by the temperature sensors 16-1 to 16-N of the respective cooling units, it is necessary to preserve in advance the valve apertures of the flow rate adjustment devices 18-j, which are associated with patterns of the battery temperatures Tj (temperature distributions), as a valve aperture control table (not shown) in the memory of the control unit 17. If the valve aperture control table is, like the valve aperture control table employed in Fig. 9, limited to values relating to a case where the absolute values of the differences ΔTj of the battery temperatures Tj from the target set temperature Topt are equal to or larger than the second threshold Tth2, the table capacity can be reduced. In addition, concrete numerical values for the valve aperture control table are set through simulation experiments or the like to be performed in advance.

To begin with, similarly to the first temperature control method, the control unit 17 sets a first threshold Tth1 and second threshold Tth2 (step S401). Thereafter, the control unit 17 acquires the battery temperatures Tj (j ranges from 1 to N) sensed by the temperature sensors 16-1 to 16-N of the respective cooling units (step S402), and decides whether the difference between the maximum value Tmax and minimum value Tmin is equal to or larger than the first threshold Tth1 (step S403). If the difference is equal to or larger than the first threshold Tth1, the control unit 17 proceeds to step S404. If the difference falls below the first threshold Tth1, the control unit 17 performs nothing but terminates the processing routine. Namely, when the difference between the maximum value and minimum value is equal to or larger than the first threshold Tth1, temperature control is implemented.

Thereafter, at step S404, similarly to the first temperature control method, the control unit 17 obtains the differences ΔTj of the battery temperatures Tj (j ranges from 1 to N) from the target set temperature Topt (step S404a), and identifies the cooling units whose battery temperatures have the differences ΔTj the absolute values of which are equal to or larger than the second threshold Tth2 (step S404b).

Based on the combination of the battery temperatures Tj whose differences ΔTj from the target set temperature Topt have the absolute values equal to or larger than the second threshold Tth2, the valve aperture control table preserved in advance in the memory is referenced in order to adjust the valve apertures of the flow rate adjustment devices 18-j (step S405).

The processing of step S401 to step S405 is performed at regular intervals. Every time the processing is performed, the degree of a temperature variance is decided at step S403. If a decision is made that the temperature variance is large, temperature control is implemented.

In the first to third temperature control methods, the target set temperature Topt is adopted as a reference value (predetermined temperature) based on which a degree of discreteness of each of sensed temperatures is checked. Alternatively, a mean value Tave among the N cooling units may be adopted. In this case, for example, the mean value Tave is calculated at the time of acquiring the sensed temperatures (step S202, S302, or S402). At step S204a, S304a, or S404a, the target set temperature Topt is replaced with the mean value Tave.

As mentioned above, in the battery system 53 and temperature control method therefor in accordance with the present embodiment, the battery system includes the cooling units provided with the cooling plates 12-1 to 12-N which include flow channels through which a refrigerant flows and on which the battery modules 11M-1 to 11M-N that are objects of temperature control are placed, and the flow rate adjustment devices 18-1 to 18-N that adjust the flow rates of the refrigerant that flows through the flow channels, the temperature sensors 16-1 to 16-N that individually sense the temperatures of the battery modules 11M-1 to 11M-N, and the refrigerant circulation mechanism 14 that branches out the refrigerant into the flow channels accompanying the respective cooling units, and joins and circulates the refrigerants coming from the flow channels. Herein, the control unit 17 (control step) adjusts the refrigerant flow rates using the flow rate adjustment devices 18-1 to 18-N according to the temperatures sensed by the temperature sensors 16-1 to 16-N for each of the cooling units.

More particularly, the control unit 17 (control step) adopts control techniques described below.
(1) When the difference between the maximum value and minimum value of the temperatures sensed by the temperature sensors 16-1 to 16-N in the N cooling units exceeds a predetermined value (first threshold), the refrigerant flow rates are adjusted.
   Accordingly, when a temperature variance exceeds a permissible range (the difference between the maximum value and minimum value is equal to or larger than the first threshold Tth1), temperature control is implemented. Eventually, unduly control can be suppressed.
(2) The refrigerant flow rates to the respective cooling units are adjusted according to a distribution of the temperatures sensed by the temperature sensors 16-1 to 16-N of the N cooling units, so that a temperature variance among the battery modules can be diminished and the temperatures thereof can be leveled.
   For example, the valve apertures of the flow rate adjustment devices 18-j associated with patterns (temperature distributions) of the sensed temperatures Tj (j ranges from 1 to N) are preserved in advance as a valve aperture control table. The valve aperture control table is referenced based on a combination of the battery temperatures Tj, and the valve apertures of the flow rate adjustment devices 18-j are adjusted accordingly. In this case, more flexible temperature control can be implemented according to the specifications of the battery system. If the valve aperture control table is limited to values relating to a case where the absolute values of the differences ΔTj of the battery temperatures Tj from the target set temperature Topt are equal to or larger than the second threshold Tth2, the capacity of the valve aperture control table can be reduced.
(3) The refrigerant flow rates are adjusted using the flaw rate adjustment devices 18-1 to 18-N according to the differences of the temperatures sensed by the temperature sensors 16-1 to 16-N from a predetermined temperature (target set temperature Topt or mean value Tave among the N cooling units), so that a temperature variance among the battery modules can be diminished and the temperatures thereof can be leveled.
   Accordingly, the battery module temperature of the object-of-control cooling unit can be approached to the target set temperature Topt or the mean value Tave among the N cooling units. Eventually, a temperature variance among the battery modules can be diminished and the temperatures thereof can be leveled.
(4) The refrigerant flow rate to the cooling unit, the sensed temperature of which has a large difference from the predetermined temperature, among the cooling units whose sensed temperatures are found in the foregoing control technique (3) to exceed the predetermined temperature (target set temperature or mean value Tave among the N cooling units) is adjusted by priority.
   Thus, since the cooing unit that exhibits the largest degree of discreteness is regarded as the object-of-control cooling unit, a temperature variance among the battery modules can be more quickly diminished and the temperatures thereof can be leveled.
(5) When the pairs of the cooling plate 12-j (j ranges from 1 to N) and battery module 11M-j placed on the cooling plate 12-j are stacked, if the refrigerant flow rate to the k-th-stage cooling unit is regarded as an object of adjustment, the refrigerant flow rates to the k-th-stage and k+1-th-stage cooling units are adjusted according to the differences of the sensed temperature of the k-th-stage cooling unit from the sensed temperatures of the k-1-th-stage and k+1-th-state cooling units, so that a temperature variance among the battery modules can be diminished and the temperatures thereof can be leveled.

As mentioned above, since the relationship between the flow rates Qk and Qk+1 to the k-th-stage and k+1-th stage cooling units is adjusted according to the result of comparison of the temperature difference of the object-of-control cooling unit from the upper-side cooling unit with the temperature difference thereof from the lower-side cooling unit, fine control dependent on a temperature distribution around the object-of-control cooling unit is enabled. In addition, a larger quantity of a refrigerant is fed to the object-of-control cooling unit, the battery temperature of which is the highest, and the cooling unit on the immediately upper side of the object-of-control cooling unit, and a smaller quantity of the refrigerant is fed to the object-of-control cooling unit, the battery temperature of which is the lowest, and the cooling unit on the immediately upper side of the object-of-control cooling unit. Thus, a temperature variance among the battery modules can be more quickly diminished, and the temperatures thereof can be leveled.

At step S203 in Fig. 7, step S303 in Fig. 8, or step S403 in Fig. 9, if a decision is made that the difference between the maximum value Tmax and minimum value Tmin falls below the first threshold Tth1, nothing is performed but the processing routine is terminated. Alternatively, as normal-cooling time control, re-setting may be performed so that a refrigerant can be distributed or fed to the cooling units, and the processing routine may then be terminated. This is because after a temperature variance is diminished to fall within a permissible temperature range, normal temperature control should be resumed.

In the first to third temperature control methods, a series of pieces of processing is performed at regular intervals. Alternatively, the performing interval may be variably set. For example, when temperature control is implemented according to any of the first to third temperature control methods, after the temperature control is completed, the time required due to the control until the object-of-control cooling unit reaches the target set temperature is estimated based on the target set temperature and the increased or decreased flow rates. In consideration of a time lag (hysteresis) of heat exchange, the time a little shorter than the estimated time is set as the performing interval. Based on a decision made using a timer or the like whether the performing interval has elapsed, when the performing interval has elapsed, the series of pieces of processing is carried out.

For example, when an object-of-control cooling unit has a high temperature, after the performing interval elapses, whether control should be implemented is decided. If the difference between the maximum value Tmax and minimum value Tmin falls below the first threshold Tth1, normal-cooling time control is re-set. Thus, excessive cooling can be prevented. In addition, even if the difference is equal to or larger than the first threshold Tth1, the object-of-control cooling unit in the processing routine is not identified. Therefore, flow rates are decreased or feed is ceased. Eventually, excessive cooling can be prevented. In addition, when the object-of-control cooling unit has a low temperature, after the performing interval elapses, whether control should be implemented is decided. If the difference between the maximum value Tmax and minimum value Tmin falls below the first threshold Tth1, normal-cooling time control is re-set. Thus, overshoot occurs, and the control unit can be prevented from having a high temperature.

In the description of the second temperature control method in the second embodiment, such a structure is presented that the pairs of the cooling plate 12-j (j ranges from 1 to N) and the battery module 11M-j placed on the cooling plate 12-j are stacked, and the upper surface of the k-th-stage battery module 11M-k and the lower surface of the k+1-th-stage cooling plate 12-k+1 have a close thermal coupling. Further, plural cooling plates (plate-like members) may be placed on the flanks of each of the battery modules, and a refrigerant flow channel may be formed over the surfaces of the plural cooling plates (plate-like members). Owing to this structure, a temperature variance among the battery modules can be more quickly diminished and the temperatures thereof can be leveled.

The configuration of the modification (Fig. 4) of the first embodiment may be applied to the second embodiment. Through one of opening/closing control by a pipe pressure adjustment mechanism of a bypass flow channel and rotating velocity control by the refrigerant circulation mechanism 14, or through a combination thereof, a rise in the liquid pressures in the pipes can be suppressed. Therefore, the pipes of the cooling system can be formed with those whose performance of withstanding a pressure is lower. This contributes to realization of a low-cost battery system. Especially in the second embodiment in which the number of cooling units is large, when feed of a refrigerant to the other cooling units that need not perform cooling is ceased and the refrigerant is fed to an object-of-control cooling unit alone, the flow rate gets N times larger. Therefore, the advantage provided by application of the modification (Fig. 4) is much larger than that provided by application thereof to the first embodiment.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A battery system comprising:
N (N denotes an integer equal to or larger than 2) cooling units each including a cooling member which includes a flow channel (5) through which a refrigerant flows and on which a battery module (1M-1, 1M-2) that is an object of temperature control is placed, and a flow rate adjustment means (8-1, 8-2) that adjusts a flow rate of the refrigerant flowing through the flow channel (5);
temperature sensing means (6-1, 6-2) that individually sense the temperatures of the battery modules (1M-1, 1M-2);
a refrigerant circulation means (4) that branches out the refrigerant into the flow channels of the N cooling units, and joins and circulates the refrigerants coming from the flow channels (5); and
a control means (7) that adjusts the refrigerant flow rates using the flow rate adjustment means (8-1, 8-2) according to the temperatures sensed by the temperature sensing means (6-1, 6-2) for each of the N cooling units.

2. The battery system according to claim 1, wherein the control means adjusts the flow rates of the refrigerant, which flows into the cooling units, according to a distribution of the sensed temperatures of the N cooling units.

3. The battery system according to claim 1 or 2, wherein the control means increases the flow rate of the refrigerant that flows into the cooling unit whose sensed temperature is relatively high, and decreases the flow rate of the refrigerant that flows into the cooling unit whose sensed temperature is relatively low.

4. The battery system according to any of claims 1 to 3, wherein:
the control means (7) adjusts the refrigerant flow rates using the flow rate adjustment means (8-1, 8-2) according to the differences of the temperatures, which are sensed by the temperature sensing means (6-1, 6-2), from a predetermined temperature; and
the predetermined temperature is a set temperature or a mean value among the N cooling units.

5. The battery system according to at least one of claims 1 to 4, wherein the control means adjusts by priority the flow rate of the refrigerant that flows into the cooling unit, the sensed temperature of which has a large difference from the predetermined temperature, among the cooling units whose sensed temperatures exceed the predetermined temperature.

6. The battery system according to any of claims 1 to 5, wherein when the difference between a maximum value and minimum value of the sensed temperatures of the N cooling units exceeds a predetermined value, the control means (7) adjusts the refrigerant flow rates.

7. The battery system according to any of claims 1 to 6, wherein the pairs of the cooling member and the battery module (1M-1, 1M-2) placed on the cooling member are stacked.

8. The battery system according to at least one of claims 1 to 7, wherein assuming that the flow rate of a refrigerant flowing into the k-th-stage (k ranges from 1 to N) cooling unit is regarded as an object of adjustment, the control means (7) adjusts the refrigerant flow rates to the k-th-stage and k+1-th-stage cooling units according to the differences of the sensed temperature of the k-th-stage cooling unit from the sensed temperatures of the k-1-th-stage and k+1-th-stage cooling units.

9. The battery system according to any of claims 1 to 8, wherein the cooling unit includes a plurality of plate-like members (2-1, 2-2) placed on the flanks or upper surface of the battery module (1M-1, 1M-2), and the flow channel (5) is formed over the plurality of plate-like members (2-1, 2-2).

10. The battery system according to any of claims 1 to 9, further comprising a bypass flow channel which is connected in parallel with the flow channels (5) accompanying the N cooling units, and whose flow rate can be adjusted.

11. The battery system according to any of claims 1 to 10, wherein the control means (7) does not feed a refrigerant to the cooling units that need not perform cooling.

12. The battery system according to any of claims 1 to 10, wherein the control means (7) performs adjustment of the refrigerant flow rates, which is performed based on the sensed temperatures, at regular intervals.

13. The battery system according to any of claims 4 to 12, wherein the control means (7) estimates the time, which elapses until the predetermined temperature is attained, on the basis of the sensed temperatures of the cooling units that have undergone flow rate adjustment, and the refrigerant flow rates that have been adjusted, and sets the time, which elapses until adjustment of the refrigerant flow rates is performed next based on the sensed temperatures, on the basis of the estimated time.

14. A temperature control method of a battery system comprising N (N denotes an integer equal to or larger than 2) cooling units each of which includes a cooling member which includes a flow channel (5) through which a refrigerant flows and on which a battery module (1M-1, 1M-2) that is an object of temperature control is placed, and a flow rate adjustment means (8-1, 8-2) that adjusts a flow rate of the refrigerant that flows through the flow channel (5), temperature sensing means (6-1, 6-2) that individually sense the temperatures of the battery modules (1M-1, 1M-2), and a refrigerant circulation means (4) that branches out the refrigerant into the flow channels (5) of the N cooling units, and joins and circulates the refrigerants coming from the flow channels (5), the temperature control method comprising:
a control step of adjusting the refrigerant flow rates using the flow rate adjustment means (8-1, 8-2) according to the temperatures sensed by the temperature sensing means (6-1, 6-2) for each of the N cooling units.

15. The battery system according to claim 14, wherein the control step increases the flow rate of the refrigerant that flows into the cooling unit whose sensed temperature is relatively high, and decreases the flow rate of the refrigerant that flows into the cooling unit whose sensed temperature is relatively low.

16. The temperature control method of a battery system according to claim 14 or 15, wherein the control step adjusts the refrigerant flow rates using the flow rate adjustment means (8-1, 8-2) according to the differences of the temperatures, which are sensed by the temperature sensing means (6-1, 6-2), from a predetermined temperature, and the predetermined temperature is a set temperature or a mean value among the N cooling units.
